# EUROPEAN PATENT APPLICATION

(11) **EP 4 597 053 A1**
(43) Date of publication of application: **06.08.2025**
(21) Application number: 25154386.4
(22) Date of filing: 28.01.2025
(51) Int. Cl.: G01J 3/10, G01J 3/50, G01J 3/52, G01J 3/02, G01J 3/28

(54) **SPECTROSCOPIC DEVICE AND LIGHT EMISSION CONTROL METHOD OF LIGHT SOURCE IN SPECTROSCOPIC DEVICE**

(30) Priority: 31.01.2024 JP 2024013461
(71) Applicant: KONICA MINOLTA, INC., Tokyo 100-7015 (JP)
(72) Inventor: NAGAOKA, Takayuki, Tokyo, 100-7015 (JP); SHOHO, Takashi, Tokyo, 100-7015 (JP)
(74) Representative: Gille Hrabal Partnerschaftsgesellschaft mbB Patentanwälte

(57) **Abstract**

A spectroscopic device (1) (3) includes a spectrometer (13) (34), an emission-line light source (14) (32) that emits an emission line for wavelength calibration, and a second light source (15) (33). The second light source (15) (33) is arranged to irradiate the emission-line light source (14) (32) with direct light from the second light source (15) (33).

## Description

### Background of the Invention

### 1. Technical Field

The present invention relates to a spectroscopic device such as a spectrophotometer and a light emission control method of a light source in the spectroscopic device.

### 2. Description of Related art

As a spectroscopic device including a spectrometer, an emission-line light source that emits an emission line for wavelength calibration, and a measurement light source, WO 2019/039024 A1 discloses a spectroscopic device in which the emission-line light source and the measurement light source are arranged in a state where each is covered with separate partitions.

However, the spectroscopic device described in WO 2019/039024 A1 has the following issues.

That is, there is an issue that the light emission of the emission-line light source is unstable at the start of wavelength calibration, which decreases the calibration accuracy.

To cope with such an issue, an averaging process by a plurality of times of measurement is performed to improve the calibration accuracy. However, a new issue arises in that it takes time to perform the wavelength calibration due to the execution of the averaging process.

### Summary of the Invention

An object of the present invention is to provide a spectroscopic device and a light emission control method of a light source in the spectroscopic device capable of performing highly accurate wavelength calibration in a short time.

As a result of research and study on a cause of unstable light emission of an emission-line light source at the start of wavelength calibration, the inventors have found that a phenomenon called a dark effect occurs. The dark effect is the phenomenon in which, when the emission-line light source for wavelength calibration is left in a dark place, it takes time from the start of voltage application to the light emission.

The present invention has been made based on such findings, and the above-described object is achieved by the following means.
(1) A spectroscopic device including:
   a spectrometer;
   an emission-line light source that emits an emission line for wavelength calibration; and
   a second light source,
   in which the second light source is arranged to irradiate the emission-line light source with direct light from the second light source.
(2) A spectroscopic device including:
   a spectrometer;
   an emission-line light source that emits an emission line for wavelength calibration; and
   a second light source,
   in which the second light source irradiates the emission-line light source with light before drive start of the emission-line light source at a light intensity that causes a time period from drive start to light emission start of the emission-line light source to be within one second.
(3) The spectroscopic device according to the aforementioned item 1 or 2, in which the spectroscopic device is a spectrophotometer having a diffuse reflective surface on an inner wall.
(4) The spectroscopic device according to the aforementioned item 3, in which the second light source serves as a measurement light source of an object to be measured or an observation light source of a surface of the object to be measured.
(5) The spectroscopic device according to the aforementioned item 4, in which the second light source is adjacent to the emission-line light source.
(6) The spectroscopic device according to the aforementioned item 3 citing the aforementioned item 2, in which
   the second light source serves as a measurement light source of an object to be measured or an observation light source of a surface of the object to be measured, and
   the second light source irradiates the emission-line light source with light via the diffuse reflective surface.
(7) The spectroscopic device according to the aforementioned item 1 or 2, in which the spectroscopic device is a device for light source color measurement.
(8) The spectroscopic device according to the aforementioned item 7, in which the second light source is adjacent to the emission-line light source.
(9) The spectroscopic device according to the aforementioned item 1 or 2, including
   a controller that controls lighting of the emission-line light source and the second light source,
   in which the controller turns on the second light source before performing wavelength calibration.
(10) The spectroscopic device according to the aforementioned item 1 or 2, in which wavelength calibration using the emission-line light source is performed after white calibration.
(11) A light emission control method of a light source in a spectroscopic device, including irradiating, in the spectroscopic device including a spectrometer, an emission-line light source that emits an emission line for wavelength calibration, and a second light source, the emission-line light source with direct light from the second light source before drive start of the emission-line light source.
(12) A light emission control method of a light source in a spectroscopic device, including irradiating, in the spectroscopic device including a spectrometer, an emission-line light source that emits an emission line for wavelength calibration, and a second light source, the emission-line light source with light from the second light source before drive start of the emission-line light source at a light intensity that causes a time period from drive start to light emission start of the emission-line light source to be within one second.

One aspect of a spectroscopic device according to the present invention includes a spectrometer, an emission-line light source that emits an emission line for wavelength calibration, and a second light source. The second light source is arranged to irradiate the emission-line light source with the direct light from the second light source. Thus, since the emission-line light source can be irradiated with the direct light from the second light source before the start of wavelength calibration, the occurrence of the dark effect can be prevented. This enables the emission-line light source to emit light stably in a shorter time at the start of wavelength calibration, thereby improving the calibration accuracy without performing an averaging process.

Another aspect of the spectroscopic device according to the present invention includes a spectrometer, an emission-line light source that emits an emission line for wavelength calibration, and a second light source. The second light source irradiates the emission-line light source with light before the drive start of the emission-line light source at a light intensity that causes a time period from the drive start to the light emission start of the emission-line light source to be within one second. With the light irradiation, it is possible to prevent the occurrence of the dark effect. This enables the emission-line light source to emit light stably within one second at the start of wavelength calibration, thereby improving the calibration accuracy without performing an averaging process.

**In** one aspect of a light emission control method of the light source in the spectroscopic device according to the present invention, the emission-line light source is irradiated with the direct light from the second light source before the drive start of the emission-line light source, so that the occurrence of the dark effect can be prevented. This enables the emission-line light source to emit light stably in a shorter time at the start of wavelength calibration, thereby improving the calibration accuracy without performing an averaging process.

In another aspect of the light emission control method of the light source in the spectroscopic device according to the present invention, the emission-line light source is irradiated with light from the second light source before the drive start of the emission-line light source at a light intensity that causes a time period from the drive start to the light emission start of the emission-line light source to be within one second. With the light irradiation, it is possible to prevent the occurrence of the dark effect. This enables the emission-line light source to emit light stably within one second at the start of wavelength calibration, thereby improving the calibration accuracy without performing an averaging process.

### Brief Description of the Drawings

Fig. 1 is a cross-sectional view illustrating a schematic configuration of a spectrophotometer which is a spectroscopic device according to a first embodiment of the present invention;
Fig. 2 is a flowchart illustrating a wavelength calibration sequence performed in the spectrophotometer of Fig. 1;
Fig. 3A is a waveform diagram of a drive voltage of an emission-line light source in a case where the emission-line light source is not irradiated with light from a second light source;
Fig. 3B is an enlarged view of a region between b and a in Fig. 3A and a peripheral region thereof;
Fig. 4A is a waveform diagram of the drive voltage of the emission-line light source in a case where the emission-line light source is irradiated with light from the second light source;
Fig. 4B is an enlarged view of a region between b and a in Fig. 4A and a peripheral region thereof;
Fig. 5 is a graph illustrating a relationship between a time period during which the emission-line light source is left in a darkroom and a time period from the drive start to the insulation breakdown start (light emission start) of the emission-line light source; and
Figs. 6A to 6C are schematic configuration diagrams of a spectroradiometer which is a spectroscopic device according to a second embodiment of the present invention.

### Detailed Description

Hereinafter, embodiments of the present invention will be described with reference to the drawings.

### [First Embodiment]

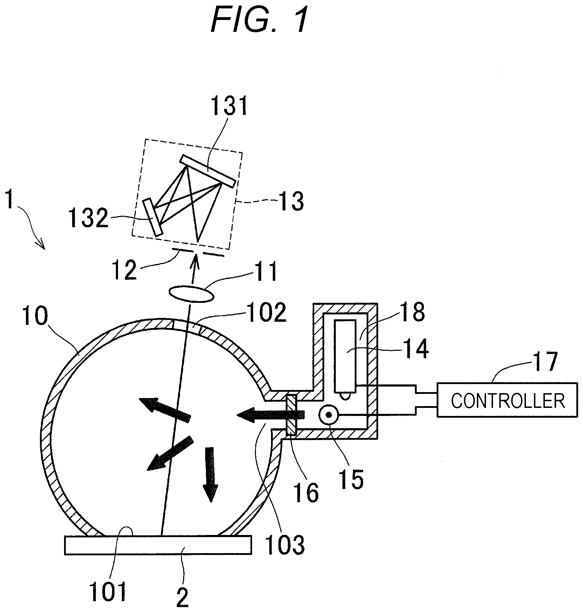

Fig. 1 is a cross-sectional view illustrating a schematic configuration of a spectrophotometer 1 which is a spectroscopic device according to an embodiment of the present invention.

The spectrophotometer 1 includes an integrating sphere 10, a condensing lens 11, an entrance slit 12, a spectrometer 13, an emission-line light source 14, a measurement light source 15, an optical element 16, a controller 17, and the like.

The integrating sphere 10 has a diffuse reflective surface on its inner wall. A measurement opening 101 is formed in the lower portion of the integrating sphere 10, and measurement is performed in a state where an object to be measured 2 or a measurement sample faces the measurement opening 101. In the integrating sphere 10, a through hole 102 is formed at a position shifted by a predetermined angle from a central axis passing through the center of the integrating sphere 10 and the center of the measurement opening 101. The condensing lens 11 is arranged outside the through hole 102, and the entrance slit 12 and the spectrometer 13 are further arranged outside the condenser lens 11. The spectrometer 13 includes a dispersive element 131 such as a diffraction grating that disperses light into respective wavelengths, and a light receiving sensor 132 that receives the light dispersed into each wavelength.

At an intermediate position in the height direction of the integrating sphere 10, a light source housing 18 is formed in communication with the interior of the integrating sphere 10 via an exit aperture 103. In the light source housing 18, the emission-line light source 14 and the measurement light source (corresponding to the second light source) 15 are housed adjacent to each other.

The emission-line light source 14 is a light source used for wavelength calibration, and a neon lamp is used therefor in this embodiment. However, the light source is not limited to the neon lamp, and any light source that emits an emission line having a known wavelength for wavelength calibration may be used. In addition, the measurement light source 15 is a light source used for measuring the object to be measured 2, and a xenon lamp is used therefor in this embodiment. However, the light source is not limited to the xenon lamp. Note that in the following description of the first embodiment, the emission-line light source is also referred to as the neon lamp, and the measurement light source is also referred to as the xenon lamp.

The arrangement relationship of the xenon lamp 15 and the neon lamp 14 is set to cause the neon lamp 14 to be irradiated with the direct light from the xenon lamp 15 when the xenon lamp 15 emits light. Here, the direct light includes light other than the diffused light, and also includes the specularly reflected light of the light from the xenon lamp 15. Thus, although not illustrated in the drawings, the arrangement relationship of the xenon lamp 15 and the neon lamp 14 may be set such that the light from the xenon lamp 15 is specularly reflected by a mirror or the like to cause the neon lamp 14 to be irradiated with the specularly reflected light.

The optical element 16 is arranged at a position in the vicinity of the exit aperture 103 in the light source housing 18. Thus, the light emitted from each of the xenon lamp 15 and the neon lamp 14 passes through the optical element 16 and is emitted from the exit aperture 103 into the interior of the integrating sphere 10, as indicated by the thick arrows in Fig. 1. The optical element 16 is, for example, a stray light prevention filter.

The controller 17 integrally controls the entire spectrophotometer 1, and specifically in this embodiment, controls the light emission of the xenon lamp 15 and the neon lamp 14.

The color measurement of the object to be measured 2 using the spectrophotometer 1 illustrated in Fig. 1 is performed as follows. In a state where the object to be measured 2 faces the measurement opening 101 of the integrating sphere 10, the xenon lamp 15 is turned on, and the light from the xenon lamp 15 is emitted into the interior of the integrating sphere 10 from the exit aperture 103 through the optical element 16. The emitted light is multiply reflected and diffused by the inner wall of the integrating sphere 10. The diffused light is reflected by the surface of the object to be measured 2. The reflected light from the object to be measured 2 enters the through hole 102, passes through the condensing lens 11, as indicated by the thin arrow in Fig. 1, and then is incident on the spectrometer 13 through the entrance slit 12. After the incidence, the light is dispersed into a plurality of wavelengths by the dispersive element 131 of the spectrometer 13. Each dispersed wavelength is received by the light receiving sensor 132. Then, a measurement value is calculated based on a light reception amount by the light receiving sensor 132.

Before measurement of the object to be measured 2, the wavelength calibration is performed. At the time of wavelength calibration, a white calibration plate as a measurement sample is arranged at the measurement opening 101 of the integrating sphere 10, instead of the object to be measured 2. In this state, the neon lamp 14 is turned on, and the light from the neon lamp 14 is emitted into the interior of the integrating sphere 10 from the exit aperture 103 through the optical element 16. The emitted light is multiply reflected and diffused by the inner wall of the integrating sphere 10. Thereafter, the reflected light from the white calibration plate of the diffused light is incident on the spectrometer 13 through the same path as in the case of measurement of the object to be measured 2, and is dispersed into predetermined wavelengths by the dispersive element 131. Each dispersed wavelength is received by the light receiving sensor 132. Then, the wavelength calibration is performed by comparing the wavelength obtained by the light receiving sensor 132 and the wavelength of the emission line emitted from the neon lamp 14.

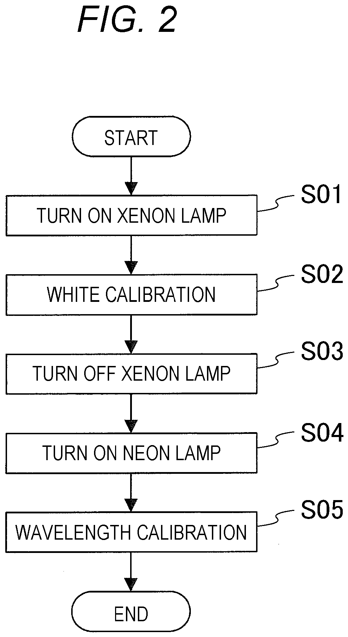

Next, a more detailed operation at the time of wavelength calibration of the spectrophotometer 1 illustrated in Fig. 1 will be described with reference to the flowchart illustrating a wavelength calibration sequence of Fig. 2.

The controller 17 turns on the xenon lamp 15 serving as the measurement light source (step S1), and then performs the white calibration (step S2). The method of white calibration is known, so that the description thereof will be omitted. During white calibration, the direct light from the xenon lamp 15 irradiates the neon lamp 14 located in an adjacent position.

Next, the controller 17 turns off the xenon lamp 15 (step S3), and then starts the lighting drive of the neon lamps 14 serving as the emission-line light source for wavelength calibration, to turn on (emit light from) the neon lamp 14 (step S4). After the neon lamp 14 is turned on, the wavelength calibration is performed (step S5).

As described above, in this embodiment, the neon lamp 14 is irradiated with the direct light from the xenon lamp 15 before the controller 17 starts the lighting drive of the neon lamp 14. The configuration in which the neon lamp 14 is irradiated with the direct light from the xenon lamp 15 is based on the following reasons.

That is, when the neon lamp 14 is left in a dark place, a phenomenon called the dark effect occurs, in which it takes time from the start of voltage application to the neon lamp 14 to the light emission start, that is, from the start of lighting drive to the light emission start. Due to the dark effect, the light emission of the neon lamp 14 is unstable, which decreases the wavelength calibration accuracy. In addition, in a case of performing the averaging process by a plurality of times of measurement or the like to compensate for the decrease in the wavelength calibration accuracy, it takes time to perform the wavelength calibration.

Then, before the controller 17 starts the lighting drive of the neon lamp 14, the xenon lamp 15 is caused to emit light to irradiate the neon lamp 14 with the direct light from the xenon lamp 15. This prevents the neon lamp 14 from starting its drive in a state of being left in a dark place, thus preventing the dark effect. As a result, the light emission of the neon lamp 14 is stabilized at an earlier stage, and the wavelength calibration accuracy is improved. In addition, coupled with the fact that the averaging process by a plurality of times of measurement is also unnecessary, the wavelength calibration can be performed in a shorter time.

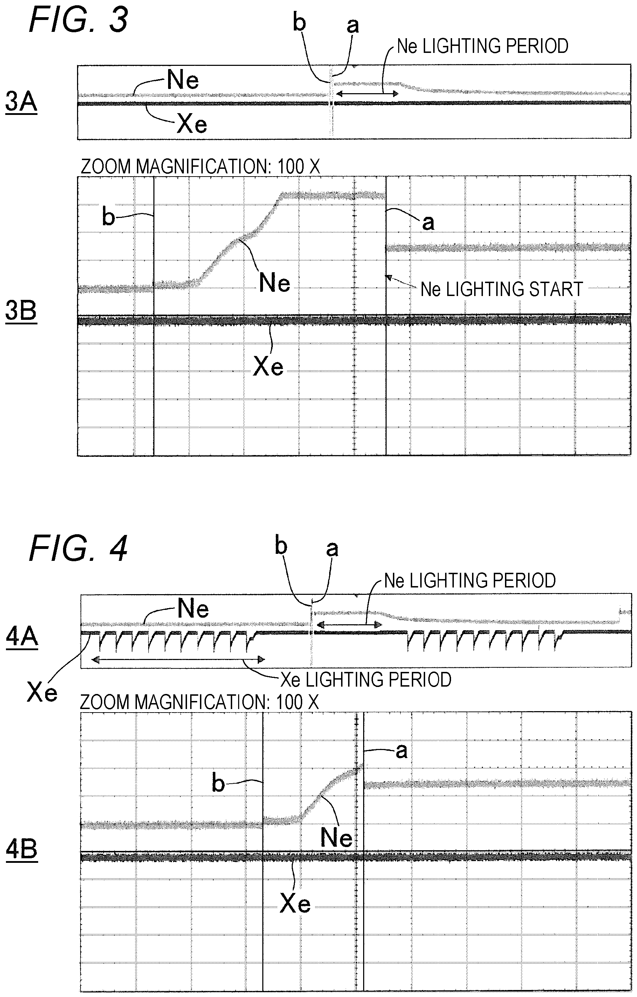

Referring to Figs. 3A and 3B and Figs. 4A and 4B, a description will be given of an effect obtained when the neon lamp 14 is irradiated with the direct light from the xenon lamp 15 before the controller 17 starts the lighting drive of the neon lamp 14.

Fig. 3A is a waveform diagram of the drive voltage of the neon lamp 14 in a case where the neon lamp 14 is not irradiated with the light from the xenon lamp 15. Fig. 3B is an enlarged view of a region between b and a in Fig. 3A and a peripheral region thereof. In these drawings, the horizontal axis represents time and the vertical axis represents voltage, respectively. The line b indicates the start of the drive voltage application to the neon lamp 14, that is, the timing of the drive start. The line a indicates the timing of the start of lighting (light emission) of the neon lamp 14. In addition, "Xe" indicates the drive voltage for the xenon lamp 15, and "Ne" indicates the drive voltage for the neon lamp 14.

In the examples illustrated in Figs. 3A and 3B, the drive of the neon lamp 14 is set to start after the neon lamp 14 is left in a darkroom for 10 minutes. The xenon lamp 15 is not turned on. In Figs. 3A and 3B, the time period from the timing b to the timing a is 84.0 ms, the voltage difference (applied voltage) between b and a is 160 V, and the time period during which the high voltage of 160 V is applied is 40 ms. That is, by applying the high voltage of the 160 V for 40 ms, the insulation breakdown of the neon lamp 14 is started, and the lighting (light emission) is started.

Fig. 4A is a waveform diagram of the drive voltage of the neon lamp 14 in a case where the neon lamp 14 is irradiated with the direct light from the xenon lamp 15. Fig. 4B is an enlarged view of a region between b and a in Fig. 4A and a peripheral region thereof. In these drawings, the horizontal axis represents time and the vertical axis represents voltage, respectively. The line b indicates the start of the drive voltage application to the neon lamp 14, that is, the timing of the drive start. The line a indicates the timing of the start of lighting (light emission) of the neon lamp 14. In addition, "Xe" indicates the drive voltage for the xenon lamp 15, and "Ne" indicates the drive voltage for the neon lamp 14.

In the examples illustrated in Figs. 4A and 4B, the drive of the neon lamp 14 is set to start after the neon lamp 14 is left in a darkroom for 2 hours. Before the drive start, the xenon lamps 15 is turned on to irradiate the neon lamp 14 with the direct light from the xenon lamp 15 for a period described as "Xe lighting period" in Fig. 4A. In Figs. 4A and 4B, the time period from the timing b to the timing a is 36.6 ms, and the voltage difference (applied voltage) between b and a is 110 V.

As a result of comparison between Figs. 3A and 3B and Figs. 4A and 4B, the following was found. That is, it was found that irradiating the neon lamp 14 with the direct light from the xenon lamp 15 before the drive start of the neon lamp 14 resulted in stable start of the insulation breakdown of the neon lamp 14 at a lower voltage and in a shorter time to start the lighting (light emission).

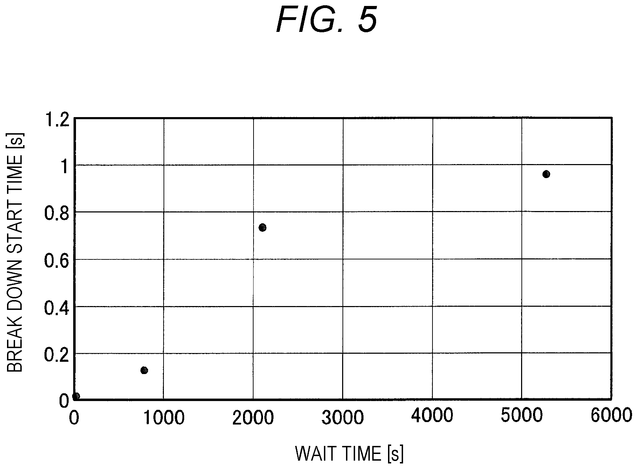

Fig. 5 is a graph illustrating a relationship between a time period during which the neon lamp 14 is left in a darkroom and a time period from the drive start to the insulation breakdown start (light emission start) of the neon lamp 14. The horizontal axis represents the time period left in a darkroom (Wait Time), and the vertical axis represents the time period from the drive start to the insulation breakdown start (Break Down Start Time). The unit of time for both is "8".

In a case of being left in a darkroom for approximately 90 min (5400 s), it results in requiring approximately 1 s (1 second) from the drive start to the light emission start, as indicated by the rightmost black dot. As the time period left in a darkroom becomes longer, the time period until the light emission start also becomes longer.

The light irradiation intensity on the neon lamp 14 and the wavelength range are preferably set for the time period from the drive start to the light emission start of the neon lamp 14 to be not more than 1 s. Preferably, the time period is set to be not more than 0.1 s, and is set to be not more than 50 ms when performing the wavelength calibration at a higher speed.

With the settings, the controller 17 causes the neon lamp 14 to be irradiated with the light from the xenon lamp 15 to suppress the occurrence of the dark effect, and then starts the drive of the neon lamp 14 to turn on the neon lamp 14. After the neon lamp 14 is turned on, the wavelength calibration is performed.

Although the spectrophotometer 1 according to the embodiment of the present invention has been described above, the configuration of the spectrophotometer 1 is not limited to the above-described embodiment.

For example, although the light from each of the neon lamp 14 and the xenon lamp 15 is emitted into the interior of the integrating sphere 10 from the same exit aperture 103, different exit apertures may be formed. However, light leakage at the time of multiple reflection inside the integrating sphere 10 is proportional to the area of the openings. Thus, when a plurality of exit apertures is provided for respective light sources, the light leakage increases, and the light amount onto the neon lamp 14 decreases. As illustrated in Fig. 1, the neon lamp 14 and the xenon lamp 15 are arranged in one light source housing 18 to emit light from one exit aperture 103. This arrangement can suppress the light leakage due to the multiple reflection inside the integrating sphere 10, and the neon lamp 14 can be efficiently irradiated with the light of the xenon lamp 15.

In addition, although a case where the neon lamp 14 is irradiated with the direct light from the xenon lamp 15 has been described, the neon lamp 14 may be irradiated with the diffused light of the light from the xenon lamp 15. However, the time period until the light emission start of the neon lamp can be shortened with a smaller amount of radiated light in a case where the neon lamp 14 is irradiated with the direct light from the xenon lamp 15, compared with in a case where the neon lamp 14 is irradiated with the diffused light. Note that the neon lamp 14 may be irradiated with the direct light and the diffused light at the same time.

In addition, the second light source for irradiating the neon lamp 14 with light is not limited to the measurement light source 15 as illustrated in the embodiment of Fig. 1, but may be an observation light source. The observation light source is a light source used in a case where a finder is provided in the spectrophotometer 1 and the position of the object to be measured 2 is checked through the finder. The observation light source may be a dedicated light source. Alternatively, the light source may also serve as the measurement light source 15. In addition, the second light source may be an LED lamp or the like.

In addition, the second light source may be arranged in the vicinity of the emission-line light source 14, instead of being adjacent to the emission-line light source 14. Alternatively, the second light source may be arranged to irradiate the emission-line light source 14 with light via the diffuse reflective surface. In a case where the second light source is a low-directivity light source such as a lamp, the inner wall in the vicinity of each light source in the light source housing 18, including the vicinity of the exit aperture 103, may be a diffuse reflective surface with high reflectivity. Also in this case, the light amount from each of the light sources 14 and 15 can be efficiently transmitted into the integrating sphere 10, and the light amount on the measurement surface of the object to be measured 2 can be increased.

In addition, in the spectrophotometer 1 illustrated in Fig. 1, the optical element 16 that is common to the light sources 14 and 15 is arranged in the vicinity of the exit aperture 103, so that the same effect of the optical element 16 can be obtained in the respective light sources 14 and 15. In addition to a stray light prevention filter, an ultraviolet cut filter, and a neutral density (ND) filter for light amount adjustment, a diffusion plate capable of obtaining an effect of improving robustness or the like may be used as the optical element 16.

### [Second Embodiment]

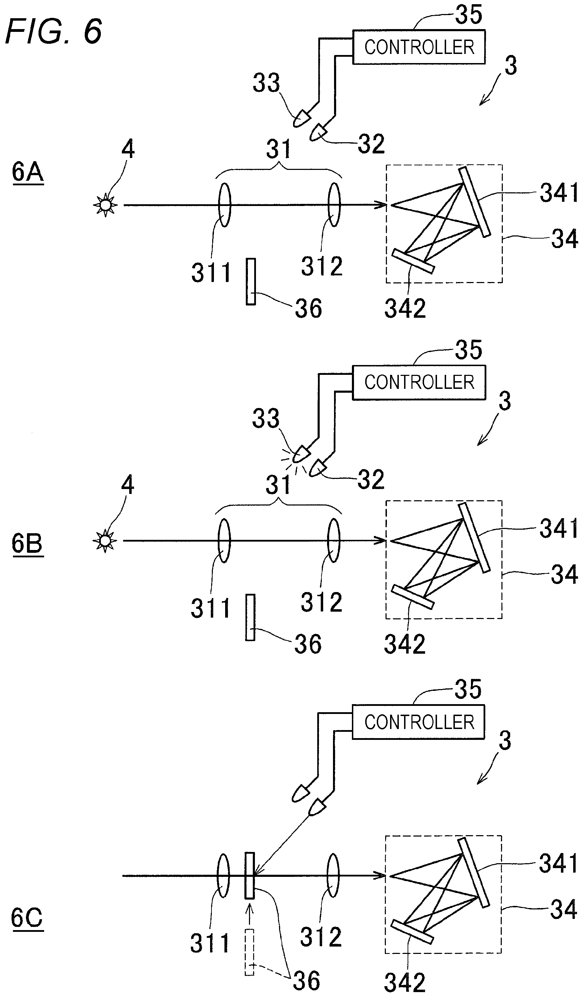

Figs. 6A to 6C are schematic configuration diagrams of a spectroradiometer 3 which is a spectroscopic device according to a second embodiment of the present invention. The spectroradiometer 3 is used to measure the luminance of a light source to be measured 4, such as a display.

The spectroradiometer 3 illustrated in Figs. 6A to 6C includes a light receiving optical system 31 including a plurality of lenses 311 and 312 that transmits the light emitted from the light source to be measured 4, an emission-line light source 32, a second light source 33, a spectrometer 34, a controller 35, a reflection member 36, and the like.

A neon lamp or the like is used as the emission-line light source 32, although the emission-line light source 32 is not limited thereto. A xenon neon lamp, an LED lamp, or the like is used as the second light source 33, although the second light source 33 is not limited thereto.

The emission-line light source 32 and the second light source 33 are arranged to cause the emission-line light source 32 to be irradiated with the direct light from the second light source 33 when the second light source 33 emits light. Here, the direct light includes the specularly reflected light of the light from the second light source 33. Thus, although not illustrated in the drawings, the arrangement relationship of the second light source 33 and the emission-line light source 32 may be set such that the light from the second light source 33 is specularly reflected by a mirror or the like to cause the emission-line light source 32 to be irradiated with the specularly reflected light. Further, the configuration in which the emission-line light source 32 is irradiated with the diffused light of light from the second light source 33 may also be adopted.

The spectrometer 34 includes a dispersive element 341 such as a diffraction grating that disperses light into respective wavelengths, and a light receiving sensor 342 that receives the light dispersed into each wavelength. Note that an entrance slit may be provided on the upstream side of the spectrometer 34.

The controller 35 integrally controls the entire spectroradiometer 3, and specifically in this embodiment, controls the light emission of the second light source 33 and the emission-line light source 32.

The reflection member 36 is driven by a drive device (not illustrated) at a position between the lens 311 and the lens 312, so as to advance onto the optical axis of the lenses 311 and 312 or retreat from the optical axis. The reflection member 36 retracts from the optical axis of the lenses 311 and 312 during color measurement of the light source to be measured 4. At the time of wavelength calibration, the reflection member 36 advances onto the optical axis of the lenses 311 and 312 to reflect the light from the emission-line light source 32 and guide the light to the spectrometer 34.

Next, the operation of the spectroradiometer 3 illustrated in Figs. 6A to 6C will be described.

As illustrated in Fig. 6A, the reflection member 36 retracts from the optical axis of the lenses 311 and 312 during color measurement of the light source to be measured 4. The light emitted from the light source to be measured 4 passes through the lenses 311 and 312, is incident on the spectrometer 34, and is dispersed into a plurality of wavelengths by the dispersive element 341 of the spectrometer 34. Each dispersed wavelength is received by the light receiving sensor 342. Then, a measurement value is calculated based on a light reception amount by the light receiving sensor 342.

Before measurement of the light source to be measured 4, the wavelength calibration is performed. Although the wavelength calibration is performed with emission-line light source 32 turned on, the controller 35 turns on the second light source 33 before the drive start of the emission-line light source 32, as illustrated in Fig. 6B. When the second light source 33 is turned on, the emission-line light source 32 is irradiated with the direct light from the second light source 33. The irradiation with the light from the second light source 33 prevents the dark effect that occurs in a case where the emission-line light source 32 is left in a dark place.

The light irradiation intensity on the emission-line light source 32 and the wavelength range are preferably set for the time period from the drive start to the light emission start of the emission-line light source 32 to be not more than 1 s. Preferably, the time period is set to be not more than 0.1 s, and is set to be not more than 50 ms when performing the wavelength calibration at a higher speed.

With the settings, the controller 35 causes the emission-line light source 32 to be irradiated with the light from the second light source 33 to suppress the occurrence of the dark effect, and then starts the drive of the emission-line light source 32 to turn on the emission-line light source 32. After the neon lamp 14 is turned on, the wavelength calibration is performed. At the time of wavelength calibration, as illustrated in Fig. 6C, the reflection member 36 advances onto the optical axis of the lenses 311 and 312 to reflect the light from the emission-line light source 32 and guide the light to the spectrometer 34. The light from the emission-line light source 32 that is incident on the spectrometer 34 is dispersed into a predetermined wavelengths by the dispersive element 341. Each dispersed wavelength is received by the light receiving sensor 342. Then, the wavelength calibration is performed by comparing the wavelength obtained by the light receiving sensor 342 and the wavelength of the emission line emitted from the emission-line light source 32.

Although the embodiment illustrated in Fig. 6 illustrates a case where the spectroscopic device is a spectroradiometer, the spectroscopic device may be a spectral illuminometer that measures the illuminance of the light source to be measured 4 or the like.

## Claims

1. A spectroscopic device (1) (3) comprising:
a spectrometer (13) (34);
an emission-line light source (14) (32) that emits an emission line for wavelength calibration; and
a second light source (15) (33),
wherein the second light source (15) (33) is arranged to irradiate the emission-line light source (14) (32) with direct light from the second light source (15) (33).

2. A spectroscopic device (1) (3) comprising:
a spectrometer (13) (34);
an emission-line light source (14) (32) that emits an emission line for wavelength calibration; and
a second light source (15) (33),
wherein the second light source (15) (33) irradiates the emission-line light source (14) (32) with light before drive start of the emission-line light source (14) (32) at a light intensity that causes a time period from drive start to light emission start of the emission-line light source (14) (32) to be within one second.

3. The spectroscopic device (1) (3) according to claim 1 or 2, wherein the spectroscopic device (1) (3) is a spectrophotometer having a diffuse reflective surface on an inner wall.

4. The spectroscopic device (1) (3) according to claim 3, wherein the second light source (15) (33) serves as a measurement light source (15) of an object to be measured (2) or an observation light source of a surface of the object to be measured (2).

5. The spectroscopic device (1) (3) according to claim 4, wherein the second light source (15) (33) is adjacent to the emission-line light source (14) (32).

6. The spectroscopic device (1) (3) according to claim 3 citing claim 2, wherein
the second light source (15) (33) serves as a measurement light source (15) of an object to be measured (2) or an observation light source of a surface of the object to be measured (2), and
the second light source (15) (33) irradiates the emission-line light source (14) (32) with light via the diffuse reflective surface.

7. The spectroscopic device (1) (3) according to claim 1 or 2, wherein the spectroscopic device (1) (3) is a device for light source color measurement.

8. The spectroscopic device (1) (3) according to claim 7, wherein the second light source (15) (33) is adjacent to the emission-line light source (14) (32).

9. The spectroscopic device (1) (3) according to claim 1 or 2, comprising
a controller (17) (35) that controls lighting of the emission-line light source (14) (32) and the second light source (15) (33),
wherein the controller (17) (35) turns on the second light source (15) (33) before performing wavelength calibration.

10. The spectroscopic device (1) (3) according to claim 1 or 2, wherein wavelength calibration using the emission-line light source (14) (32) is performed after white calibration.

11. A light emission control method of a light source in a spectroscopic device (1) (3), comprising irradiating, in the spectroscopic device (1) (3) comprising a spectrometer (13) (34), an emission-line light source (14) (32) that emits an emission line for wavelength calibration, and a second light source (15) (33), the emission-line light source (14) (32) with direct light from the second light source (15) (33) before drive start of the emission-line light source (14) (32).

12. A light emission control method of a light source in a spectroscopic device (1) (3), comprising irradiating, in the spectroscopic device (1) (3) comprising a spectrometer (13) (34), an emission-line light source (14) (32) that emits an emission line for wavelength calibration, and a second light source (15) (33), the emission-line light source (14) (32) with light from the second light source (15) (33) before drive start of the emission-line light source (14) (32) at a light intensity that causes a time period from drive start to light emission start of the emission-line light source (14) (32) to be within one second.
